# FASCICULE DE BREVET EUROPEEN

(11) **EP 4 142 246 B1**
(45) Date de publication et mention de la délivrance du brevet: **25.02.2026**
(21) Numéro de dépôt: 22191230.6
(22) Date de dépôt: 19.08.2022
(51) Int. Cl.: H04L 45/02, H04L 45/24, H04L 45/302

(54) **PROCÉDÉ DE DÉTECTION DE NOEUDS VOISINS APTES À COMMUNIQUER PAR COURANTS PORTEURS EN LIGNE ET PAR UN CANAL RADIO**
VERFAHREN ZUR ERKENNUNG VON BENACHBARTEN KNOTEN, DIE ZUR KOMMUNIKATION ÜBER LEITUNGSGEBUNDENE TRÄGERSTRÖME UND ÜBER EINEN FUNKKANAL GEEIGNET SIND
METHOD FOR DETECTING NEIGHBOURING NODES CAPABLE OF COMMUNICATING BY POWERLINE COMMUNICATION AND BY A RADIO CHANNEL

(30) Priorité: 26.08.2021 FR 2108920
(43) Date de publication de la demande: 01.03.2023
(73) Titulaire: Sagemcom Energy & Telecom SAS, 92270 Bois-Colombes (FR)
(72) Inventeur: BAROIS, Jérôme, 92500 RUEIL MALMAISON (FR); BACRI, Guillaume, 92500 RUEIL MALMAISON (FR)
(74) Mandataire: Cabinet Le Guen Maillet

(56) Documents cités:
- US-A1- 2019 296 797
- ANIL MENGI G3-PLC ALLIANCE GERMANY: "Narrowband OFDM PLC specifications for G3-PLC networks;C18", vol. 18/15, 18 March 2021 (2021-03-18), pages 1 - 277, XP044307267, Retrieved from the Internet <URL:https://www.itu.int/ifa/t/2017/sg15/docs/rgm/Q18-210308/C/T17-SG15RGM-Q18-210308-C-0018.docx> [retrieved on 20210318]
- ANONYMOUS: "IEEE Standard for Low-Rate Wireless Networks", IEEE STANDARD, 5 December 2015 (2015-12-05), Piscataway, NJ, USA, XP055739725, ISBN: 978-1-5044-0845-5, Retrieved from the Internet <URL:https://ieeexplore.ieee.org/stampPDF/getPDF.jsp?tp=&arnumber=7460875&ref=aHR0cHM6Ly9pZWVleHBsb3JlLmllZWUub3JnL2RvY3VtZW50Lzc0NjA4NzU=> [retrieved on 20201014]
- "IEEE Standard for Local and metropolitan area networks- Part 15.4: Low-Rate Wireless Personal Area Networks (LR-WPANs)Amendment 6: TV White Space Between 54 MHz and 862 MHz Physical Layer ; BRCr2_pre_d5_802.15.4m-", IEEE DRAFT; BRCR2_PRE_D5_802.15.4M-2013, IEEE-SA, PISCATAWAY, NJ USA, vol. 802.15, no. d5_802.15.4m-2013, 3 December 2013 (2013-12-03), pages 1 - 134, XP068059684
- ANIL MENGI G3-PLC ALLIANCE GERMANY: "Companion Specification : G3-PLC Hybrid PLC & RF Profile;C10", vol. 18/15, 2 March 2021 (2021-03-02), pages 1 - 50, XP044306033, Retrieved from the Internet <URL:https://www.itu.int/ifa/t/2017/sg15/docs/rgm/Q18-210308/C/T17-SG15RGM-Q18-210308-C-0010.docx> [retrieved on 20210302]
- NARTEN IBM E NORDMARK SUN MICROSYSTEMS W SIMPSON DAYDREAMER H SOLIMAN ELEVATE TECHNOLOGIES T: "Neighbor Discovery for IP version 6 (IPv6); rfc4861.txt", NEIGHBOR DISCOVERY FOR IP VERSION 6 (IPV6)?; RFC4861.TXT, INTERNET ENGINEERING TASK FORCE, IETF; STANDARD, INTERNET SOCIETY (ISOC) 4, RUE DES FALAISES CH- 1205 GENEVA, SWITZERLAND, 30 September 2007 (2007-09-30), XP015052407

## Description

### DOMAINE TECHNIQUE

La présente invention concerne le domaine des réseaux maillés de communication par courants porteurs en ligne et plus précisément un procédé de détections de nœuds voisins aptes à communiquer par courants porteurs en ligne et par un canal radio.

### ETAT DE LA TECHNIQUE ANTERIEURE

Les communications par courants porteurs en ligne PLC (sigle signifiant « PowerLine Communications », en anglais) se développent, notamment dans le cadre des réseaux d'alimentation électrique de type AMM (sigle signifiant « Automated Meter Management », en anglais). Des réseaux de communication sont ainsi implémentés dans des réseaux d'alimentation électrique pour la collecte automatisée par un dispositif nœud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

La norme de communication G3-PLC est définie pour permettre aux différents dispositifs nœuds (notamment concentrateur de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL, sigle de « Data Link Layer », en anglais) du modèle OSI (acronyme de « Open Systems Interconnection », en anglais). La norme G3-PLC est destinée à être exploitée dans des bandes fréquentielles allant de 10 à 490 kHz. Elle supporte plus particulièrement les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, de portée, et de résistance aux perturbateurs, notamment.

Dans une évolution de la norme G3-PLC définie dans une Annexe H de la recommandation ITU-T G.9903 (2017) Amendement 1 (05/2021), appelée G3-PLC Hybrid PLC & RF, un canal radio RF (acronyme de radio-fréquence) peut être utilisé à la place d'une desdites bandes fréquentielles PLC. Plus précisément, cette version de la norme permet l'utilisation occasionnelle d'une couche physique radio secondaire basée sur une modulation SUN FSK telle que définie dans le standard IEEE 802.15.4:2015. Ainsi, en utilisant les différents médias G3-PLC et RF pour transmettre des données, le réseau d'alimentation électrique maximise sa couverture et sa résilience. Un nœud réseau d'alimentation électrique capable d'émettre et de recevoir des données en utilisant les deux médias (PLC et RF) est appelé nœud hybride.

Toutefois, dans G3-PLC Hybrid PLC & RF, le choix de communiquer entre deux nœuds hybrides du réseau de communication en utilisant soit une bande fréquentielle PLC soit un canal radio RF est déterminé au moment de la construction ou de la reconstruction des routes de communication.

Ce choix du medium de communication utilisé entre deux nœuds hybrides du réseau est généralement fixe pendant plusieurs heures.

De plus, la construction ou la reconstruction d'une route utilise une part importante de la bande passante du réseau maillé.

La norme G3-PLC Hybrid PLC & RF définie dans l'Amendement 1 (05/2021) ne permet donc pas d'utiliser toute la flexibilité offerte par l'hybridation PLC/RF.

Le document de Ail Mengi G3-PLC alliance germany intitulé narrow band OFDM PLC specifications for G3-PLC networks C18 spécifie le fonctionnement d'équipements conformes à la spécification G3-PLC.

Le document intitulé « IEEE standard for low rate wireless networks » spécifie le fonctionnement d'appareils pour les réseaux sans fils bas débit.

Il est alors souhaitable de pallier ces inconvénients de l'état de la technique.

Il est notamment souhaitable de fournir une solution qui permette de déterminer rapidement si un nœud voisin est apte à communiquer par courants porteurs en ligne et par un canal radio et de pouvoir s'adapter au type de communication utilisé par un nœud voisin apte à communiquer par courants porteurs en ligne et par un canal radio.

### EXPOSE DE L'INVENTION

A cette fin, selon un premier aspect, l'invention propose un procédé de détection de la capacité d'un nœud voisin à communiquer par courants porteurs en ligne et par un canal radio dans un réseau de communication maillé, le réseau de communication maillé comportant une pluralité de dispositifs nœuds utilisant au moins des communications par courants porteurs en ligne, caractérisé en ce que le procédé est exécuté par chaque dispositif nœud apte à émettre des paquets sur au moins une bande fréquentielle du réseau d'alimentation électrique utilisant des communications par courants porteurs en ligne et sur le canal radio et comporte les étapes de :
- génération d'une trame et émission de la trame, la trame comportant un champ comportant des primitives, une des primitives indiquant une adresse du dispositif nœud, une autre des primitives indiquant au moins une adresse d'un dispositif nœud auquel est destinée la trame, la primitive indiquant au moins une adresse d'un dispositif nœud auquel est destinée la trame ne comportant aucune adresse,
- vérification si une trame de balise améliorée est reçue et dans l'affirmative :
- lecture dans la trame reçue, d'une adresse d'un dispositif nœud auquel est destinée la trame reçue,
- vérification si l'adresse lue est identique à son adresse,
- identification du dispositif nœud ayant émis la trame de balise améliorée reçue comme un nœud voisin apte à communiquer par courants porteurs en ligne et par un canal radio. L'invention concerne aussi un dispositif de de détection de la capacité d'un nœud voisin à communiquer par courants porteurs en ligne et par un canal radio dans un réseau de communication maillé (120), le réseau de communication maillé (120) comportant une pluralité de dispositifs nœuds utilisant au moins des communications par courants porteurs en ligne, caractérisé en ce que chaque dispositif nœud apte à émettre des paquets sur au moins une bande fréquentielle du réseau d'alimentation électrique utilisant des communications par courants porteurs en ligne et sur le canal radio comporte :
- des moyens de génération d'une trame et d'émission de la trame, la trame comportant un champ comportant des primitives, une des primitives indiquant une adresse du dispositif nœud, une autre des primitives indiquant au moins une adresse d'un dispositif nœud auquel est destinée la trame, la primitive indiquant au moins une adresse d'un dispositif nœud auquel est destinée la trame ne comportant aucune adresse,
- des moyens de vérification si une trame de balise améliorée est reçue et dans l'affirmative :
- des moyens de lecture dans la trame reçue, d'une adresse d'un dispositif nœud auquel est destinée la trame reçue,
- des moyens de vérification si l'adresse lue est identique à son adresse,
- des moyens d'identification du dispositif nœud ayant émis la trame de balise améliorée reçue comme un nœud voisin apte à communiquer par courants porteurs en ligne et par un canal radio.

Ainsi, il est possible de déterminer rapidement si un nœud voisin est apte à communiquer par courants porteurs en ligne.

Selon un mode particulier de l'invention, la trame émise et la trame reçues sont des trames de balise améliorées telles que décrites dans le document IEEE 802.15.4:2015.

Selon un mode particulier de l'invention, chaque dispositif nœud apte à émettre des paquets sur au moins une bande fréquentielle du réseau d'alimentation électrique utilisant des communications par courants porteurs en ligne et sur le canal radio peuvent émettre des données selon trois modes de fonctionnement :
- un mode de fonctionnement dit parallèle dans lequel le contenu des paquets émis simultanément sur la au moins une bande de fréquence est différent du contenu des paquets émis sur le canal radio,
- un mode dit de fonctionnement étendu dans lequel les données à transmettre sont réparties en deux groupes de données par une opération d'entrelacement et d'encodage desdites données, un groupe étant associé à au moins une bande de fréquence et l'autre groupe étant associé au canal radio,
- un mode de fonctionnement dit hyper robuste dans lequel le contenu des paquets émis sur la au moins une bande de fréquence est identique au contenu des paquets émis sur le canal radio.

Selon un mode particulier de l'invention, dans un premier temps le mode de communication est déterminé par chaque dispositif nœud en obtenant un indicateur de qualité de lien pour au moins une bande de fréquence et pour le canal radio et dans un second temps à partir de deux paquets reçus simultanément d'un autre dispositif nœud apte à émettre des paquets sur au moins une bande fréquentielle du réseau d'alimentation électrique utilisant des communications par courants porteurs en ligne et sur le canal radio. Ainsi, il est possible de s'adapter au type de communication utilisé par un nœud voisin apte à communiquer par courants porteurs en ligne et par un canal radio.

Selon un mode particulier de l'invention :
- si les indicateurs de qualités de lien pour la au moins une bande de fréquence et pour le canal radio sont supérieurs à des seuils prédéterminés le dispositif nœud utilise le mode parallèle,
- si un des indicateurs de qualités de lien pour la au moins une bande de fréquence et pour le canal radio est inférieur à un seuil prédéterminé le dispositif nœud utilise le mode étendu,
- si les indicateurs de qualités de lien pour la au moins une bande de fréquence et pour le canal radio sont inférieurs aux seuils prédéterminés le dispositif nœud utilise le mode hyper robuste.

Selon un mode particulier de l'invention, le mode de communication est déterminé en vérifiant si les paquets reçus sont identiques et en vérifiant si un dés-entrelacement et un décodage des données des paquets sont valides.

La présente invention concerne aussi un produit programme d'ordinateur. Il comprend des instructions pour implémenter, par un dispositif nœud, le procédé selon l'un des modes de réalisation précédents, lorsque ledit programme est exécuté par un processeur du dispositif nœud.

La présente invention concerne aussi un support de stockage. Il stocke un programme d'ordinateur comprenant des instructions pour implémenter, par un dispositif nœud, le procédé selon l'un des modes de réalisation précédents, lorsque ledit programme est exécuté par un processeur du dispositif nœud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un réseau de communication selon un mode de réalisation ;
[Fig. 2] illustre schématiquement les différentes couches d'un modèle OSI dans le cas particulier de la norme G3-PLC Hybrid PLC & RF ;
[Fig. 3] illustre schématiquement un procédé de détection de la capacité d'un nœud voisin à communiquer par courants porteurs en ligne et par un canal radio ;
[Fig. 4] illustre schématiquement un procédé d'adaptation au type de communication utilisé par un nœud voisin apte à communiquer par courants porteurs en ligne et par un canal radio ;
[Fig. 5] illustre schématiquement un exemple d'architecture matérielle d'un dispositif nœud du réseau de communication selon un mode de réalisation.

### EXPOSE DETAILLE DE MODES DE REALISATION

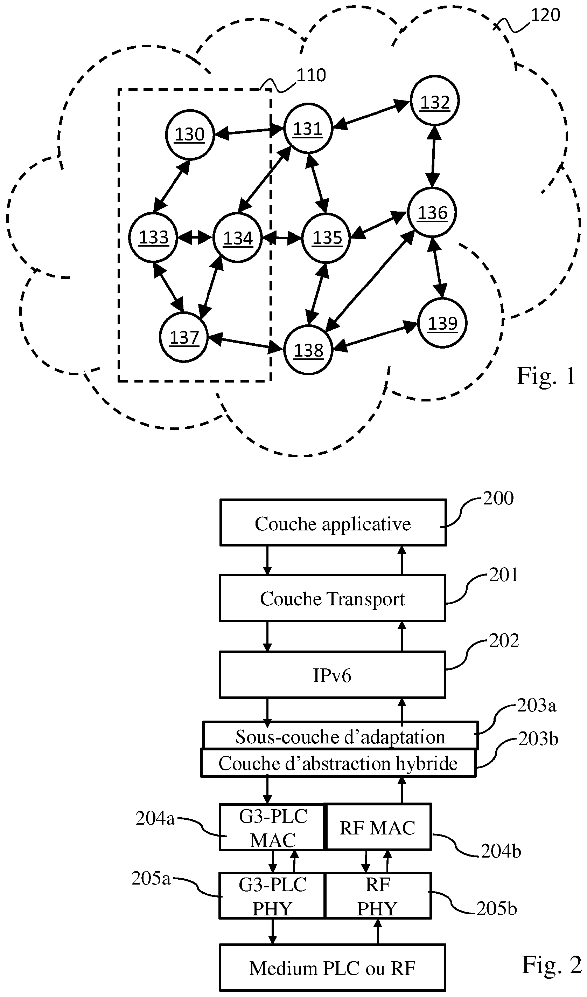

La **Fig. 1** illustre schématiquement un réseau de communication maillé 120. Le réseau de communication maillé 120 est par exemple un réseau d'alimentation électrique de type AMM. Le réseau de communication maillé 120 s'appuie sur des communications par courants porteurs en ligne PLC ou par radio-fréquences RF pour permettre à un dispositif nœud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs nœuds du réseau de communication maillé 120. Le réseau de communication maillé 120 peut comporter d'autres dispositifs nœuds, par exemple installés au niveau de transformateurs électriques. Le réseau de communication 120 a donc une structure maillée, telle que représentée schématiquement sur la Fig. 1 à l'aide des flèches, où des dispositifs nœuds jouent le rôle de relais pour augmenter la portée des communications dans le réseau de communication maillé 120, comme détaillé ci-après. Ainsi, un même compteur électrique intelligent dispose potentiellement de plusieurs chemins pour atteindre le concentrateur de données, et vice versa. Dans la suite du document, les termes « compteur électrique intelligent » et « compteur » sont utilisés de manière interchangeable.

La présente invention est ainsi particulièrement adaptée au contexte de la technologie G3-PLC Hybrid PLC & RF telle que définie dans la recommandation ITU-T G.9903 (2017) Amendement 1 (05/2021) et plus particulièrement dans l'Annexe H.

Le réseau de communication maillé 120 comporte ainsi une pluralité de dispositifs nœuds 130, 131, 132, 133, 134, 135, 136, 137, 138, 139. A chaque dispositif nœud du réseau de communication maillé 120 est associé un voisinage réseau. Sur la Fig. 1, le dispositif nœud 133 est associé à un voisinage réseau 110 englobant les dispositifs nœuds 130, 134 et 137. En effet, dans le réseau de communication maillé 120, un signal ou un message diffusé par un dispositif nœud (tel que le dispositif nœud 133) n'est en général pas visible en tout point dudit réseau de communication. Chaque dispositif nœud émetteur de signaux ou de messages dispose alors d'un voisinage réseau, c'est-à-dire d'un sous-ensemble dudit réseau de communication maillé 120 dans lequel tout dispositif nœud peut recevoir de manière intelligible lesdits signaux ou messages directement en provenance du dispositif nœud ayant diffusé lesdits signaux ou messages. Le voisinage réseau correspond à la portée des signaux émis, en fonction de paramètres prédéterminés de transmission (e.g. puissance, schéma de modulation et de codage, topologie réseau...) du dispositif nœud à la source desdits signaux et aussi potentiellement en fonction de caractéristiques du canal de communication (atténuation, bruit, impédance...).

Le réseau de communication maillé 120 s'appuie sur un protocole de routage de type réactif, tel que le protocole LOADng (« Lightweight On-demand Ad hoc Distance-vector Routing Protocol - Next Generation » en anglais). Contrairement aux protocoles de routage de type proactif qui s'appuient sur une connaissance globale de topologie réseau, les protocoles de routage de type réactif s'appuient sur des découvertes de routes à la demande, chaque dispositif nœud du réseau ayant alors besoin uniquement d'avoir connaissance de son propre voisinage réseau pour router des données dans le réseau de communication maillé 120.

Les schémas de modulation applicables (et des schémas de démodulation correspondants) sont préférentiellement des schémas de modulation (respectivement schémas de démodulation) multi-porteuse de type OFDM (« Orthogonal Frequency Division Multiplex » en anglais) pour la au moins une bande fréquentielle ou SUN-FSK (Smart Utility Network - Frequency Shift Keying en anglais) pour le canal radio RF.

En termes de bandes fréquentielles utilisables dans le cadre de la mise en œuvre du réseau de communication maillé 120, on peut citer : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; la bande fréquentielle CENELEC B, qui va approximativement de 98 kHz à 122 kHz et le canal radio RF qui va approximativement de 863 MHz à 870 MHz. Il est alors possible d'utiliser : un premier schéma de modulation à trente-six porteuses dans la bande fréquentielle CENELEC A ; un second schéma de modulation à soixante-douze porteuses dans la bande fréquentielle FCC ; un troisième schéma de modulation à cinquante-quatre porteuses dans la bande fréquentielle ARIB ; un quatrième schéma de modulation à seize porteuses dans la bande fréquentielle CENELEC B et un cinquième schéma de modulation de type SUN-FSK pour le canal radio RF de G3-PLC Hybrid PLC & RF. La modulation SUN-FSK est définie dans la section 20 du document IEEE 802.15.4 :2015.

La **Fig. 2** illustre schématiquement les différentes couches d'un modèle OSI dans le cas particulier de la norme G3-PLC Hybrid PLC & RF telle que définie dans l'annexe H de la recommandation ITU-T G.9903 (2017) Amendement 1 (05/2021).

Un message à transmettre provenant d'une couche applicative 200 est transmis à une couche transport 201. La couche transport 201 regroupe l'ensemble des protocoles chargés de la gestion des erreurs et du contrôle des flux réseaux. Les deux principaux protocoles utilisés sont les protocoles TCP et UDP. La couche transport 201 crée des paquets en ajoutant des entêtes aux données en provenance de la couche applicative 200. Les paquets sont ensuite transmis à une couche IP 202, e.g. IPv6. La couche IP 202 encapsule les paquets en provenance de la couche transport 201 en ajoutant notamment un entête IP, e.g. IPv6. Un paquet IPv6 peut faire jusqu'à 1400 octets. Dans le cas où le paquet est de taille supérieure à une valeur de seuil, ce paquet est fragmenté en au moins deux fragments afin de l'adapter aux contraintes d'une sous-couche MAC 204a ou 204b, notamment à la taille des trames MAC.

A cet effet, la norme G3-PLC Hybrid PLC & RF incorpore le protocole 6LoWPAN lequel permet d'adapter des paquets de données IPv6 aux contraintes des sous-couches MAC 204a ou 204b, notamment en les fragmentant. En effet, les trames MAC utilisées sont de tailles bien inférieures (400 octets maximum disponibles par paquet pour la partie IP) aux paquets IPv6 de 1 400 octets.

Une sous-couche adaptation 203a incorporant le protocole 6LoWPAN et située entre la couche réseau IP 202 et la sous-couche MAC 204a ou 204b du modèle OSI reçoit de la couche réseau IP 202 des paquets IPv6 de 1 280 octets et le cas échéant les fragmente. Bien entendu dans le cas d'un paquet IP suffisamment petit pour être contenu dans une seule trame MAC G3-PLC ou MAC RF aucune fragmentation n'est effectuée.

Une couche d'abstraction hybride 203b transfère ensuite le fragment ou le paquet IP en cas d'absence de fragmentation à la sous-couche MAC appropriée 204a ou 204b en fonction du médium choisi pour sa transmission. Dans la suite le terme fragment est utilisé pour désigner à la fois un fragment obtenu à partir d'un paquet IP fragmenté ou bien le paquet IP lui-même en cas d'absence de fragmentation.

La transmission d'un fragment sur le médium PLC, i.e. sur la ligne de courant, comprend classiquement différentes étapes notamment une segmentation des fragments afin de les adapter à une couche physique G3-PLC PHY 205a et une modulation OFDM du signal. La segmentation consiste à partitionner une trame MAC en PSDUs (acronyme anglais de « PHY Service Data Unit »). Tous les PSDU issus d'un même fragment sont modulés en utilisant un même schéma de modulation.

La transmission d'un fragment par radio-fréquences sur le canal RF comprend différentes étapes notamment une segmentation des fragments afin de les adapter à une couche physique RF PHY 205b et une modulation SUN-FSK du signal. Comme dans le cas PLC, la segmentation consiste à partitionner une trame MAC en PSDUs (acronyme anglais de « PHY Service Data Unit »). Tous les PSDU issus d'un même fragment sont modulés en utilisant un même schéma de modulation. La spécification de la couche physique RF PHY est donnée dans les sections 10, 11 et 20 de la norme IEEE 802.15.4-2015 telle que modifiée par le document IEEE 802.15.4v:2017 et complétée par la Table H-5-1 de la recommandation ITU-T G.9903 (2017) Amendement 1 (05/2021).

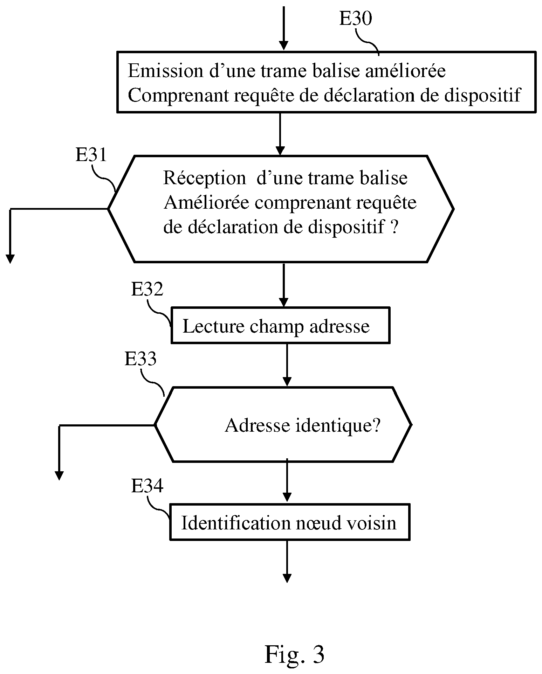

La **Fig. 3** illustre schématiquement un procédé de détection de la capacité d'un nœud voisin à communiquer par courants porteurs en ligne et par un canal radio.

L'algorithme est exécuté périodiquement, par exemple toutes les 10 minutes

A l'étape E30, un dispositif nœud apte à communiquer par courants porteurs en ligne et par un canal radio commande à la couche RF Mac 204, pour la génération d'une trame de balise améliorée (en anglais Enhanced beacon frame) et l'émission de la trame de balise améliorée. La trame de balise améliorée est par exemple une trame telle que décrite dans le document IEEE 802.15.4:2015. La trame de balise améliorée comporte un champ comportant des primitives telles que décrites dans le paragraphe 8.2.24 du document IEEE 802.15.4-2015. Les primitives comportent un champ noté coordAddrMode indiquant le mode d'adressage du concentrateur auquel est relié le dispositif nœud, un champ noté CoodPanid indiquant l'identifiant du dispositif nœud dans le réseau maillé, un champ noté CoordAddress qui indique l'adresse du dispositif nœud émettant la trame de balise améliorée, un champ DaAddrlist qui indique les adresses des nœuds auquel est destinée la trame de balise améliorée. Selon l'invention le champ DaAddrlist qui indique les adresses des nœuds auquel est destinée la trame est vide.

A l'étape E31, le dispositif nœud apte à communiquer par courants porteurs en ligne et par un canal radio vérifie si une trame de balise améliorée est reçue en réponse à la trame de balise améliorée émise à l'étape E30.

Dans l'affirmative, le dispositif nœud apte à communiquer par courants porteurs en ligne et par un canal radio passe à l'étape E32. Dans la négative, le dispositif nœud apte à communiquer par courants porteurs en ligne et par un canal radio interrompt le présent algorithme.

A l'étape E32, le dispositif nœud apte à communiquer par courants porteurs en ligne et par un canal radio lit dans la trame de balise améliorée reçue, l'adresse comprise dans le champ DaAddrlist est identique à son adresse.

A l'étape E33, le dispositif nœud apte à communiquer par courants porteurs en ligne et par un canal radio vérifie si, l'adresse comprise dans le champ DaAddrlist lue à l'étape E32 est identique à son adresse. En d'autres mots, le dispositif nœud apte à communiquer par courants porteurs en ligne et par un canal radio vérifie si l'adresse comprise dans le champ DaAddrlist lue à l'étape E32 est l'adresse du dispositif nœud ayant émis la trame dont la primitive indiquant au moins une adresse d'un dispositif nœud auquel est destinée la trame ne comporte aucune adresse.

Dans l'affirmative, le dispositif nœud apte à communiquer par courants porteurs en ligne et par un canal radio passe à l'étape E34. Dans la négative, le dispositif nœud apte à communiquer par courants porteurs en ligne et par un canal radio interrompt le présent algorithme.

A l'étape E34, le dispositif nœud apte à communiquer par courants porteurs en ligne et par un canal radio identifie le dispositif nœud ayant émis la trame de balise améliorée reçue à l'étape E31 comme un nœud voisin apte à communiquer par courants porteurs en ligne et par un canal radio.

Il est à remarquer ici que seul le dispositif nœud ayant émis la trame de balise améliorée à l'étape E30 identifie le dispositif nœud ayant émis la trame de balise améliorée reçue à l'étape E31 comme un nœud voisin apte à communiquer par courants porteurs en ligne et par un canal radio.

Le dispositif nœud ayant émis la trame de balise améliorée reçue à l'étape E31 pour savoir si le dispositif nœud ayant émis la trame de balise améliorée à l'étape E30 doit exécuter le présent algorithme.

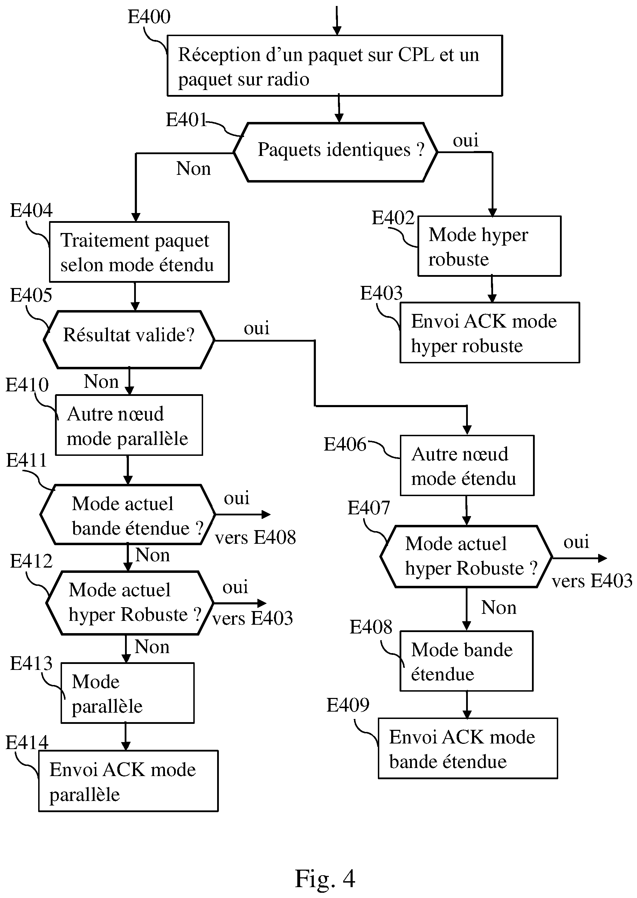

La Fig. 4 illustre schématiquement un procédé d'adaptation au type de communication utilisé par un nœud voisin apte à communiquer par courants porteurs en ligne et par un canal radio.

Selon l'invention, les dispositifs nœuds aptes à communiquer par courants porteurs en ligne et par un canal radio peuvent émettre des données selon trois modes de fonctionnement.

Chaque dispositif nœud obtient un indicateur LQI de qualité de lien (LQI est l'acronyme anglais de « Link Quality Indicator ») pour au moins une bande de fréquence et pour le canal radio et détermine son mode de fonctionnement.

Si les indicateurs de qualités de lien pour la au moins une bande de fréquence et pour le canal radio sont supérieurs à des seuils prédéterminés le dispositif nœud utilise la au moins une bande de fréquence et le canal radio pour transférer simultanément des paquets. Le contenu des paquets émis sur la au moins une bande de fréquence est différent du contenu des paquets émis sur le canal radio. Ce mode est appelé par la suite mode parallèle.

Si les indicateurs de qualités de lien pour la au moins une bande de fréquence et pour le canal radio sont inférieurs à des seuils prédéterminés le dispositif nœud utilise la au moins une bande de fréquence et le canal radio pour transférer simultanément des paquets. Le contenu des paquets émis sur la au moins une bande de fréquence est identique au contenu des paquets émis sur le canal radio. Ce mode est appelé par la suite mode hyper robuste.

Si un des indicateurs de qualités de lien pour la au moins une bande de fréquence et pour le canal radio est inférieur à un des seuils prédéterminés le dispositif nœud répartit les données à transmettre en deux groupes de données par une opération d'entrelacement et d'encodage desdites données, chaque groupe étant associé à un medium de communication parmi les courants porteurs en ligne et le canal radio, et transmet chaque donnée à une couche MAC du médium de communication associé au groupe auquel appartient ladite donnée. Ce mode est appelé par la suite mode étendu.

L'algorithme de la Fig. 4 permet, si besoin, à un dispositif nœud d'adapter le type de communication qu'il détermine au type de communication utilisé par un nœud voisin apte à communiquer par courants porteurs en ligne et par un canal radio.

A l'étape E400, le dispositif nœud apte à communiquer par courants porteurs en ligne et par un canal radio détecte la réception simultanée d'un paquet sur au moins une bande de fréquence et d'un paquet sur le canal radio.

A l'étape E401, le dispositif nœud apte à communiquer par courants porteurs en ligne et par un canal radio vérifie si les contenus des deux paquets reçus simultanément sont identiques.

Dans l'affirmative, le dispositif nœud apte à communiquer par courants porteurs en ligne et par un canal radio passe à l'étape E402. Dans la négative, le dispositif nœud apte à communiquer par courants porteurs en ligne et par un canal radio passe à l'étape E404.

A l'étape E402, le dispositif nœud apte à communiquer par courants porteurs en ligne et par un canal radio sélectionne le mode hyper robuste comme mode de fonctionnement.

A l'étape E403, le dispositif nœud apte à communiquer par courants porteurs en ligne et par un canal radio commande le transfert d'un acquittement sur le canal radio et sur la au moins une bande de fréquence selon le mode hyper robuste.

A l'étape E404, le dispositif nœud apte à communiquer par courants porteurs en ligne et par un canal radio applique un dés-entrelacement et un décodage des données des données comprises dans les paquets simultanément reçus.

A l'étape E405, le dispositif nœud apte à communiquer par courants porteurs en ligne et par un canal radio vérifie si le résultat du dés-entrelacement et du décodage est valide, par exemple en vérifiant si la partie entête en anglais « header » du résultat a un format conforme à la spécification G3.

Dans l'affirmative, le dispositif nœud apte à communiquer par courants porteurs en ligne et par un canal radio passe à l'étape E406. Dans la négative, le dispositif nœud apte à communiquer par courants porteurs en ligne et par un canal radio passe à l'étape E410.

A l'étape E406, le dispositif nœud apte à communiquer par courants porteurs en ligne et par un canal radio détermine que le dispositif nœud ayant émis les deux paquets simultanément est dans le mode étendu.

A l'étape E407, le dispositif nœud apte à communiquer par courants porteurs en ligne et par un canal radio vérifie si son mode de fonctionnement est le mode hyper robuste.

Dans l'affirmative, le dispositif nœud apte à communiquer par courants porteurs en ligne et par un canal radio passe à l'étape E403. Dans la négative, le dispositif nœud apte à communiquer par courants porteurs en ligne et par un canal radio passe à l'étape E408.

A l'étape E408, le dispositif nœud apte à communiquer par courants porteurs en ligne et par un canal radio sélectionne le mode étendu comme mode de fonctionnement.

A l'étape E409, le dispositif nœud apte à communiquer par courants porteurs en ligne et par un canal radio commande le transfert d'un acquittement sur le canal radio et sur la au moins une bande de fréquence selon le mode bande étendue.

A l'étape E410, le dispositif nœud apte à communiquer par courants porteurs en ligne et par un canal radio détermine que le dispositif nœud ayant émis les deux paquets simultanément est dans le mode parallèle.

A l'étape E411, le dispositif nœud apte à communiquer par courants porteurs en ligne et par un canal radio vérifie si son mode de fonctionnement est le mode bande étendue.

Dans l'affirmative, le dispositif nœud apte à communiquer par courants porteurs en ligne et par un canal radio passe à l'étape E408. Dans la négative, le dispositif nœud apte à communiquer par courants porteurs en ligne et par un canal radio passe à l'étape E412.

A l'étape E412, le dispositif nœud apte à communiquer par courants porteurs en ligne et par un canal radio vérifie si son mode de fonctionnement est le mode hyper robuste.

Dans l'affirmative, le dispositif nœud apte à communiquer par courants porteurs en ligne et par un canal radio passe à l'étape E403. Dans la négative, le dispositif nœud apte à communiquer par courants porteurs en ligne et par un canal radio passe à l'étape E413.

A l'étape E413, le dispositif nœud apte à communiquer par courants porteurs en ligne et par un canal radio sélectionne le mode parallèle.

A l'étape E409, le dispositif nœud apte à communiquer par courants porteurs en ligne et par un canal radio commande le transfert d'un acquittement sur le canal radio et d'un acquittement sur la au moins une bande de fréquence selon le mode parallèle.

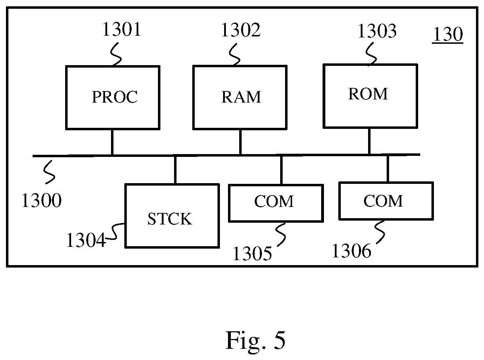

La Fig. 5 illustre schématiquement un exemple d'architecture matérielle d'un dispositif nœud du réseau de communication selon un mode de réalisation.

Un tel dispositif nœud est qualifié de multi-bande car capable de transmettre un message sur plusieurs bandes fréquentielles. On note que la Fig. 5 pourrait aussi illustrer schématiquement un exemple d'architecture matérielle d'un module de traitement compris dans le dispositif nœud.

Selon l'exemple d'architecture matérielle représenté à la Fig. 5, le dispositif nœud 130 comprend alors, reliés par un bus de communication 1300 : un processeur ou CPU (« Central Processing Unit » en anglais) 1301 ; une mémoire vive RAM (« Random Access Memory » en anglais) 1302 ; une mémoire morte ROM (« Read Only Memory » en anglais) 1303 ; une unité de stockage telle qu'un disque dur (ou un lecteur de support de stockage, tel qu'un lecteur de cartes SD (« Secure Digital » en anglais) 1304 ; au moins une interface de communication 1305 permettant au dispositif nœud 130 de communiquer avec les dispositifs nœuds appartenant à son voisinage, e.g. les nœuds 131 et 133.

Le processeur 1301 est capable d'exécuter des instructions chargées dans la RAM 1302 à partir de la ROM 1303, d'une mémoire externe (non représentée), d'un support de stockage (tel qu'une carte SD), ou d'un réseau de communication. Lorsque le dispositif nœud est mis sous tension, le processeur 1301 est capable de lire de la RAM 1302 des instructions et de les exécuter. Ces instructions forment un programme d'ordinateur causant la mise en œuvre, par le processeur 1301, de tout ou partie des procédés décrits en relation avec les Figs. 3 et 4.

Les procédés décrits ci-après en relation avec les Figs. 3 et 4 peuvent être implémentés sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif nœud 130 comprend de la circuiterie électronique configurée pour mettre en œuvre les procédés décrits en relation avec les Figs. 3 et 4.

## Revendications

1. Procédé de détection de la capacité d'un nœud voisin à communiquer par courants porteurs en ligne et par un canal radio dans un réseau de communication maillé (120), le réseau de communication maillé (120) comportant une pluralité de dispositifs nœuds utilisant au moins des communications par courants porteurs en ligne, **caractérisé en ce que** le procédé est exécuté par chaque dispositif nœud apte à émettre des paquets sur au moins une bande fréquentielle du réseau d'alimentation électrique utilisant des communications par courants porteurs en ligne et sur le canal radio et comporte les étapes de :
- génération d'une trame et émission de la trame(E30), la trame comportant un champ comportant des primitives, une des primitives indiquant une adresse du dispositif nœud, une autre des primitives indiquant au moins une adresse d'un dispositif nœud auquel est destinée la trame, la primitive indiquant au moins une adresse d'un dispositif nœud auquel est destinée la trame ne comportant aucune adresse,
- vérification (E31) si une trame de balise améliorée est reçue en réponse à la trame émise et dans l'affirmative :
- lecture (E32) dans la trame reçue, d'une adresse d'un dispositif nœud auquel est destinée la trame reçue,
- vérification (E33) si l'adresse lue est identique à l'adresse du dispositif nœud ayant émis la trame dont la primitive indiquant au moins une adresse d'un dispositif nœud auquel est destinée la trame ne comporte aucune adresse,
- identification (E34) du dispositif nœud ayant émis la trame de balise améliorée reçue comme un nœud voisin apte à communiquer par courants porteurs en ligne et par un canal radio.

2. Procédé selon la revendication 1, **caractérisé en ce que** la trame émise et la trame reçue sont des trames de balise améliorées conformes au document IEEE 802.15.4:2015.

3. Procédé selon la revendication 1 ou 2, **caractérisé en ce que** chaque dispositif nœud apte à émettre des paquets sur au moins une bande fréquentielle du réseau d'alimentation électrique utilisant des communications par courants porteurs en ligne et sur le canal radio peut émettre des données selon trois modes de fonctionnement :
- un mode de fonctionnement dit parallèle dans lequel le contenu des paquets émis simultanément sur la au moins une bande de fréquence est différent du contenu des paquets émis sur le canal radio,
- un mode dit de fonctionnement étendu dans lequel les données à transmettre sont réparties en deux groupes de données par une opération d'entrelacement et d'encodage desdites données, un groupe étant associé à au moins une bande de fréquence et l'autre groupe étant associé au canal radio,
- un mode de fonctionnement dit hyper robuste dans lequel le contenu des paquets émis sur la au moins une bande de fréquence est identique au contenu des paquets émis sur le canal radio.

4. Procédé selon la revendication 3, **caractérisé en ce que** dans un premier temps le mode de communication est déterminé par chaque dispositif nœud en obtenant un indicateur de qualité de lien pour au moins une bande de fréquence et pour le canal radio et dans un second temps à partir de deux paquets reçus simultanément d'un autre dispositif nœud apte à émettre des paquets sur au moins une bande fréquentielle du réseau d'alimentation électrique utilisant des communications par courants porteurs en ligne et sur le canal radio.

5. Procédé selon la revendication 4, **caractérisé en ce que** :
- si les indicateurs de qualités de lien pour la au moins une bande de fréquence et pour le canal radio sont supérieurs à des seuils prédéterminés le dispositif nœud utilise le mode parallèle,
- si un des indicateurs de qualités de lien pour la au moins une bande de fréquence et pour le canal radio est inférieur à un seuil prédéterminé le dispositif nœud utilise le mode étendu,
- si les indicateurs de qualités de lien pour la au moins une bande de fréquence et pour le canal radio sont inférieurs aux seuils prédéterminés le dispositif nœud utilise le mode hyper robuste.

6. Procédé selon la revendication 5, **caractérisé en ce que** le mode de communication est déterminé en vérifiant si les paquets reçus sont identiques et en vérifiant si un dés-entrelacement et un décodage des données des paquets sont valides.

7. Dispositif de détection de la capacité d'un nœud voisin à communiquer par courants porteurs en ligne et par un canal radio dans un réseau de communication maillé (120), le réseau de communication maillé (120) comportant une pluralité de dispositifs nœuds utilisant au moins des communications par courants porteurs en ligne, **caractérisé en ce que** chaque dispositif nœud apte à émettre des paquets sur au moins une bande fréquentielle du réseau d'alimentation électrique utilisant des communications par courants porteurs en ligne et sur le canal radio comporte :
- des moyens de génération d'une trame et d'émission de la trame, la trame comportant un champ comportant des primitives, une des primitives indiquant une adresse du dispositif nœud, une autre des primitives indiquant au moins une adresse d'un dispositif nœud auquel est destinée la trame, la primitive indiquant au moins une adresse d'un dispositif nœud auquel est destinée la trame ne comportant aucune adresse,
- des moyens de vérification si une trame de balise améliorée est reçue en réponse à la trame émise et dans l'affirmative :
- des moyens de lecture dans la trame reçue, d'une adresse d'un dispositif nœud auquel est destinée la trame reçue,
- des moyens de vérification si l'adresse lue est identique à l'adresse du dispositif nœud ayant émis la trame dont la primitive indiquant au moins une adresse d'un dispositif nœud auquel est destinée la trame ne comporte aucune adresse,
- des moyens d'identification du dispositif nœud ayant émis la trame de balise améliorée reçue comme un nœud voisin apte à communiquer par courants porteurs en ligne et par un canal radio.

8. Un produit programme d'ordinateur **caractérisé en ce qu'**il comprend des instructions pour implémenter, par un dispositif nœud, le procédé selon l'une quelconque des revendications 1 à 6, lorsque ledit programme est exécuté par un processeur du dispositif nœud.

9. Un support de stockage **caractérisé en ce qu'**il stocke un programme d'ordinateur comprenant des instructions pour implémenter, par un dispositif nœud, le procédé selon l'une quelconque des revendications 1 à 6, lorsque ledit programme est exécuté par un processeur du dispositif nœud

## Patentansprüche

1. Verfahren zur Detektion der Fähigkeit eines benachbarten Knotens zur Kommunikation über Powerline und über einen Funkkanal in einem vermaschten Kommunikationsnetz (120), wobei das vermaschte Kommunikationsnetz (120) eine Mehrzahl von Knotenvorrichtungen aufweist, die wenigstens Kommunikationen über Powerline verwenden, **dadurch gekennzeichnet, dass** das Verfahren von jeder Knotenvorrichtung ausgeführt wird, die geeignet ist, Pakete auf wenigstens einem Frequenzband des Stromversorgungsnetzes unter Verwendung von Powerline-Kommunikationen und auf dem Funkkanal auszusenden, und die folgenden Schritte aufweist:
- Erzeugen eines Rahmens und Aussenden des Rahmens (E30), wobei der Rahmen ein Feld mit Primitiven aufweist, wobei eine der Primitiven eine Adresse der Knotenvorrichtung angibt, eine andere der Primitiven wenigstens eine Adresse einer Knotenvorrichtung angibt, für die der Rahmen bestimmt ist, wobei die Primitive, die wenigstens eine Adresse einer Knotenvorrichtung angibt, für die der Rahmen bestimmt ist, keine Adresse aufweist,
- Überprüfen (E31), ob ein verbesserter Beacon-Rahmen als Reaktion auf den ausgesendeten Rahmen empfangen ist, und wenn ja:
- Lesen (E32) einer Adresse einer Knotenvorrichtung, für die der empfangene Rahmen bestimmt ist, im empfangenen Rahmen,
- Überprüfen (E33), ob die gelesene Adresse mit der Adresse der Knotenvorrichtung identisch ist, die den Rahmen ausgesendet hat, dessen Primitive, die wenigstens eine Adresse einer Knotenvorrichtung angibt, für die der Rahmen bestimmt ist, keine Adresse aufweist,
- Ermitteln (E34) der Knotenvorrichtung, die den empfangenen verbesserten Beacon-Rahmen als benachbarter Knoten ausgesendet hat, der geeignet ist, über Powerline und über einen Funkkanal zu kommunizieren.

2. Verfahren nach Anspruch 1, **dadurch gekennzeichnet, dass** der ausgesendete Rahmen und der empfangene Rahmen verbesserte Beacon-Rahmen sind, die dem Dokument IEEE 802.15.4:2015 entsprechen.

3. Verfahren nach Anspruch 1 oder 2, **dadurch gekennzeichnet, dass** jede Knotenvorrichtung, die geeignet ist, Pakete auf wenigstens einem Frequenzband des Stromversorgungsnetzes unter Verwendung von Powerline-Kommunikationen und auf dem Funkkanal auszusenden, Daten gemäß drei Betriebsmodi aussenden kann:
- einem sogenannten parallelen Betriebsmodus, bei dem sich der Inhalt der Pakete, die gleichzeitig auf dem wenigstens einen Frequenzband ausgesendet werden, vom Inhalt der Pakete unterscheidet, die auf dem Funkkanal ausgesendet werden,
- einem sogenannten erweiterten Betriebsmodus, bei dem die zu übertragenden Daten durch einen Vorgang des Interleavings und der Codierung der Daten in zwei Gruppen von Daten aufgeteilt werden, wobei eine Gruppe wenigstens einem Frequenzband und die andere Gruppe dem Funkkanal zugeordnet ist,
- einem sogenannten hyperrobusten Betriebsmodus, bei dem der Inhalt der Pakete, die auf dem wenigstens einen Frequenzband ausgesendet werden, mit dem Inhalt der Pakete identisch ist, die auf dem Funkkanal ausgesendet werden.

4. Verfahren nach Anspruch 3, **dadurch gekennzeichnet, dass** zuerst der Kommunikationsmodus von jeder Knotenvorrichtung durch Erhalt eines Verbindungsqualitätsindikators für wenigstens ein Frequenzband und für den Funkkanal bestimmt wird, und dann anhand zweier Pakete, die gleichzeitig von einer anderen Knotenvorrichtung empfangen werden, die geeignet ist, Pakete auf wenigstens einem Frequenzband des Stromversorgungsnetzes unter Verwendung von Powerline-Kommunikationen und auf dem Funkkanal auszusenden.

5. Verfahren nach Anspruch 4, **dadurch gekennzeichnet, dass**:
- wenn die Verbindungsqualitätsindikatoren für das wenigstens eine Frequenzband und für den Funkkanal größer als vorbestimmte Schwellen sind, die Knotenvorrichtung den parallelen Modus verwendet,
- wenn einer der Verbindungsqualitätsindikatoren für das wenigstens eine Frequenzband und für den Funkkanal kleiner als eine vorbestimmte Schwelle ist, die Knotenvorrichtung den erweiterten Modus verwendet,
- wenn die Verbindungsqualitätsindikatoren für das wenigstens eine Frequenzband und für den Funkkanal kleiner als die vorbestimmten Schwellen sind, die Knotenvorrichtung den hyperrobusten Modus verwendet.

6. Verfahren nach Anspruch 5, **dadurch gekennzeichnet, dass** der Kommunikationsmodus bestimmt wird, indem überprüft wird, ob die empfangenen Pakete identisch sind, und indem überprüft wird, ob ein Deinterleaving und eine Decodierung der Daten der Pakete gültig sind.

7. Vorrichtung zur Detektion der Fähigkeit eines benachbarten Knotens zur Kommunikation über Powerline und über einen Funkkanal in einem vermaschten Kommunikationsnetz (120), wobei das vermaschte Kommunikationsnetz (120) eine Mehrzahl von Knotenvorrichtungen aufweist, die wenigstens Kommunikationen über Powerline verwenden, **dadurch gekennzeichnet, dass** jede Knotenvorrichtung geeignet ist, Pakete auf wenigstens einem Frequenzband des Stromversorgungsnetzes unter Verwendung von Powerline-Kommunikationen und auf dem Funkkanal auszusenden, und Folgendes aufweist:
- Mittel zum Erzeugen eines Rahmens und Aussenden des Rahmens, wobei der Rahmen ein Feld mit Primitiven aufweist, wobei eine der Primitiven eine Adresse der Knotenvorrichtung angibt, eine andere der Primitiven wenigstens eine Adresse einer Knotenvorrichtung angibt, für die der Rahmen bestimmt ist, wobei die Primitive, die wenigstens eine Adresse einer Knotenvorrichtung angibt, für die der Rahmen bestimmt ist, keine Adresse aufweist,
- Mittel zum Überprüfen, ob ein verbesserter Beacon-Rahmen als Reaktion auf den ausgesendeten Rahmen empfangen ist, und wenn ja:
- Mittel zum Lesen einer Adresse einer Knotenvorrichtung, für die der empfangene Rahmen bestimmt ist, im empfangenen Rahmen,
- Mittel zum Überprüfen, ob die gelesene Adresse mit der Adresse der Knotenvorrichtung identisch ist, die den Rahmen ausgesendet hat, dessen Primitive, die wenigstens eine Adresse einer Knotenvorrichtung angibt, für die der Rahmen bestimmt ist, keine Adresse aufweist,
- Mittel zum Ermitteln der Knotenvorrichtung, die den empfangenen verbesserten Beacon-Rahmen als benachbarter Knoten ausgesendet hat, der geeignet ist, über Powerline und über einen Funkkanal zu kommunizieren.

8. Computerprogrammprodukt, **dadurch gekennzeichnet, dass** es Anweisungen zur Implementierung des Verfahrens nach einem der Ansprüche 1 bis 6 durch eine Knotenvorrichtung bei Ausführung des Programms durch einen Prozessor der Knotenvorrichtung umfasst.

9. Speichermedium, **dadurch gekennzeichnet, dass** ein Computerprogramm darauf gespeichert ist, das Anweisungen zur Implementierung des Verfahrens nach einem der Ansprüche 1 bis 6 durch eine Knotenvorrichtung bei Ausführung des Programms durch einen Prozessor der Knotenvorrichtung umfasst.

## Claims

1. Method for detecting the ability of a neighbouring node to communicate by powerline and by a radio channel in a mesh communication network (120), the mesh communication network (120) comprising a plurality of node devices using at least powerline communications, **characterised in that** the method is implemented by each node device able to send packets on at least one frequency band of the electrical supply network using communications by powerline and over the radio channel, and comprises the steps of:
- generating a frame and sending the frame (E30), the frame comprising a field comprising primitives, one of the primitives indicating an address of the node device, another one of the primitives indicating at least one address of a node device for which the frame is intended, the primitive indicating at least one address of a node device for which the frame is intended not comprising any address,
- checking (E31) whether an enhanced beacon frame is received in response to the frame sent and, if so:
- reading (E32) in the received frame an address of a node device for which the received frame is intended,
- checking (E33) whether the address read is identical to the address of the node device that sent the frame the primitive of which indicating at least one address of a node device for which the frame is intended does not comprise any address,
- identifying (E34) the node device that sent the enhanced beacon frame received as a neighbouring node able to communicate by powerline and by a radio channel.

2. Method according to claim 1, **characterised in that** the frame sent and the frame received are enhanced beacon frames conforming to the document IEEE 802.15.4:2015.

3. Method according to claim 1 or 2, **characterised in that** each node device able to send packets on at least one frequency band of the electrical supply network using communications by powerline and over the radio channel can send data according to three operating modes:
- a so-called parallel operating mode wherein the content of the packets sent simultaneously on the at least one frequency band is different from the content of the packets sent over the radio channel,
- a so-called extended operating mode wherein the data to be transmitted are distributed in two groups of data by an operation of interlacing and encoding said data, one group being associated with at least one frequency band and the other group being associated with the radio channel,
- a so-called hyper-robust operating mode wherein the content of the packets sent on the at least one frequency band is identical to the content of the packets sent over the radio channel.

4. Method according to claim 3, **characterised in that** firstly the communication mode is determined by each node device by obtaining a link quality indicator for at least one frequency band and for the radio channel and secondly from two packets received simultaneously from another node device able to send packets on at least one frequency band of the electrical supply network using communications by powerline and over the radio channel.

5. Method according to claim 4, **characterised in that**
- if the link quality indicators for the at least one frequency band and for the radio channel are above predetermined thresholds, the node device uses the parallel mode,
- if one of the link quality indicators for the at least one frequency band and for the radio channel is below a predetermined threshold, the node device uses the extended mode,
- if the link quality indicators for the at least one frequency band and for the radio channel are below the predetermined thresholds, the node device uses the hyper-robust mode.

6. Method according to claim 5, **characterised in that** the communication mode is determined by checking whether the packets received are identical and by checking whether a deinterleaving and a decoding of the data of the packets are valid.

7. Device for detecting the ability of a neighbouring node to communicate by powerline and by a radio channel in a mesh communication network (120), the mesh communication network (120) comprising a plurality of node devices using at least powerline communications, **characterised in that** each node device able to send packets on at least one frequency band of the electrical supply network using communications by powerline and over the radio channel comprises:
- means for generating a frame and sending the frame, the frame comprising a field comprising primitives, one of the primitives indicating an address of the node device, another one of the primitives indicating at least one address of a node device for which the frame is intended, the primitive indicating at least one address of a node device for which the frame is intended not comprising any address,
- means for checking whether an enhanced beacon frame is received and, if so:
- means for reading in the received frame an address of a node device for which the received frame is intended,
- means for checking whether the address read is identical to the address of the node device that sent the frame the primitive of which indicating at least one address of a node device for which the frame is intended does not comprise any address,
- means for identifying the node device that sent the enhanced beacon frame received as a neighbouring node able to communicate by powerline and by a radio channel.

8. A computer program product **characterised in that** it comprises instructions for implementing, by a node device, the method according to any one of claims 1 to 6, when said program is executed by a processor of the node device.

9. A storage medium **characterised in that** it stores a computer program comprising instructions for implementing, by a node device, the method according to any one of claims 1 to 6, when said program is executed by a processor of the node device.
